Europäisches Patentamt

European Patent Office

Office européen des brevets

(19)

(11) Veröffentlichungsnummer: **0 337 141**
**A1**

# (12) EUROPÄISCHE PATENTANMELDUNG

(21) Anmeldenummer: 89104633.6

(22) Anmeldetag: 15.03.89

(51) Int. Cl.⁴: **G02B 6/42**

(30) Priorität: 31.03.88 DE 3811033

(43) Veröffentlichungstag der Anmeldung:
18.10.89 Patentblatt 89/42

(84) Benannte Vertragsstaaten:
**DE GB**

(71) Anmelder: **Siemens Aktiengesellschaft**
**Wittelsbacherplatz 2**
**D-8000 München 2(DE)**

(72) Erfinder: **Althaus, Hans-Ludwig, Dr.**
**Heinrich-Heine-Strasse 11**
**D-8411 Lappersdorf(DE)**
Erfinder: **Hörmann, Ewald**
**Krankenhausstrasse 2 c**
**D-8150 Holzkirchen(DE)**
Erfinder: **Bialas, Joachim, Dr.**
**Bolzweg 3**
**D-8024 Deisenhofen(DE)**
Erfinder: **Keil, Rudolf, Dr.**

**verstorben(DE)**
Erfinder: **Haltenorth, Helmut, Dr.**
**Werner-Friedmann-Bg. 18**
**D-8000 München 50(DE)**
Erfinder: **Sobota, Edmund**
**Ravensburger Ring 65 e**
**D-8000 München 60(DE)**

(54) **Lichtwellenleiter-Durchführung für optoelektronische Module und Verfahren zu ihrer Herstellung.**

(57) Mit einer Lichtwellenleiter-Durchführung für optoelektronische Module soll eine Lichtwellenleiter-Faser (1) hermetisch dicht und mechanisch stabil, insbesondere langzeitstabil, direkt durch eine Modulgehäusewand geführt werden. Die Lichtwellenleiter-Faser (1) ist in ein relativ dickwandig ausgebildetes Metallröhrchen (2) in dessen gehäuseseitiges Vorderteil ohne äußere Umhüllung (5) druckeingeglast und in dessen Hinterteil eingeklebt.

Die erfindungsgemäße Lichtwellenleiter-Durchführung findet insbesondere bei optoelektronischen Wandlermodulen Anwendung.

FIG 1

## Lichtwellenleiter-Durchführung für optoelektronische Module und Verfahren zu ihrer Herstellung

Die Erfindung betrifft eine Lichtwellenleiter-Durchführung für optoelektronische Module, bei der eine Lichtwellenleiter-Faser durch ein Metallröhrchen hermetisch dicht geführt ist, das in einer Öffnung in der Modulgehäusewand befestigt ist, und ein Verfahren zum Herstellen der Lichtwellenleiter-Durchführung.

Elektro-optische Wandlermodule für die optische Nachrichtentechnik müssen neben elektrischen auch optische Durchführungen aufweisen.

Insbesondere aus Kostengründen soll kein optischer Stecker benutzt werden, sondern die Lichtwellenleiter-Faser soll direkt durch die Gehäusewand geführt werden, und zwar in Form einer Anschlußfaser (pigtail). Diese Durchführung muß hermetisch dicht und mechanisch stabil sein. Wegen der angeführten Forderungen scheidet eine Klebung aus.

Es wurden bisher mehrere Lichtwellenleiter-Durchführungen bzw. Verfahren zu deren Herstellung entwickelt und auch teilweise kommerziell eingesetzt:

So ist bereits eine hermetisch dichte Lichtleitfaser-Durchführung durch eine Gehäusewand bekannt, bei der die Lichtleitfaser in einer Metallkapillare eingeschlossen ist, welche in einer Bohrung in der Gehäusewand fixiert ist. Die Metallkapillare besteht dabei aus einem Material mit niedrigerem Schmelzpunkt und höherem Ausdehnungskoeffizienten als die Lichtleitfaser, und ist an mindestens einer Stelle auf die Lichtleitfaser aufgeschmolzen (DE-OS 34 40 437).

Außerdem ist es bekannt, die Lichtwellenleitfaser in ein dünnwandiges Metallröhrchen einzuglasen, das in einen Flansch eingelötet und an das Gehäuse angeschweißt wird.

Weiterhin bekannt ist eine Glasfaser für eine optische Leitung der Nachrichtentechnik, bei der zur Verbesserung der Lötfähigkeit, der mechanischen Festigkeit und insbesondere der optischen Qualität die Glasfaseroberfläche nacheinander von innen nach außen mit einer Titan-, Palladium- und Goldschicht versehen wird (DE-OS 34 45 982).

Ferner ist eine gasdichte Durchführung einer Glasfaser durch die Wand eines gasdichten Gehäuses eines optoelektronischen Moduls bekannt, bei der ein Loch der Wand durch einen Pfropf aus vakuumdichtem, elastischem Material, der durch Zusammendrücken unter Druckspannung eingefügt wurde, gasdicht verschlossen ist, wobei im Pfropf ein geradliniger, die Glasfaser dicht unter Druckspannung umschließender Kanal vom Gehäuseäußeren zum Gehäuseinneren angebracht ist (DE-PS 36 06 588).

Diese bekannten Lichtwellenleiter-Durchführungen sind allerdings relativ aufwendig in ihrer Herstellung und nicht ausreichend hermetisch dicht, insbesondere nicht mechanisch stabil genug, um die geforderte Dichtheit über längere Zeiträume zu gewährleisten.

Der Erfindung liegt die Aufgabe zugrunde, eine Lichtwellenleiter-Durchführung der eingangs genannten Art sowie ein Verfahren zu ihrer Herstellung anzugeben, das nicht nur wenig Aufwand erfordert und kostengünstig ist, sondern eine hermetisch dichte und mechanisch sehr stabile Lichtwellenleiter-Durchführung ermöglicht, die insbesondere eine hohe Langzeitstabilität auch unter störenden äußeren Einflüssen garantiert.

Diese Aufgabe wird erfindungsgemäß durch eine Lichtwellenleiter-Durchführung mit den Merkmalen des Anspruchs 1 bzw. durch eine Fertigungstechnik mit den Merkmalen des Anspruchs 9 gelöst. Vorteilhafte Ausgestaltungen und Weiterbildungen der Erfindung sind Gegenstand zusätzlicher Ansprüche.

Für derartige Lichtwellenleiter-Durchführungen ist wesentlich, daß das Metallröhrchen, das relativ dickwandig ausgebildet ist, aus einem Material besteht, dessen Wärmeausdehnungskoeffizient höher als der des Einschmelzglases und des Materials der Lichtwellenleiter-Faser ist.

Die mit der Erfindung erzielten Vorteile bestehen insbesondere darin, daß die erfindungsgemäße Lichtwellenleiter-Durchführung auf dem Prinzip der Druckglasdurchführung der Lichtwellenleiter-Faser durch ein relativ dickwandiges Metallröhrchen beruht. Eine derartige Durchführung zeichnet sich insbesondere durch hohe Temperaturbelastbarkeit, Temperaturschockfestigkeit, mechanische Stabilität, Vakuumdichtigkeit und gute Wärmeableitung aus.

Die Lichtwellenleiter-Faser wird nur im vorderen Teil des Metallröhrchens, d. h. dem gehäuseseitigen Teil eingeglast, um die Durchführung hermetisch dicht und langzeitstabil zu machen. Im hinteren Teil des Metallröhrchens wird die Lichtwellenleiter-Faser eingeklebt, um eine Zugentlastung zu erreichen.

Zusätzlich wird vorteilhaft ein Schrumpfschlauch als Knickschutz für die Lichtwellenleiter-Faser angebracht.

Nach Fertigstellung wird das Metallröhrchen mit einem Flansch versehen und an die Öffnung im Modulgehäuse angeschweißt. Die Druckglasdurchführung zusammen mit dem relativ dickwandigen Röhrchen garantieren eine hohe mechanische Stabilität der Durchführung. Der Flansch dient außerdem zur Justierung der Anordnung.

Anhand von in den Figuren der Zeichnung dargestellten, bevorzugten Ausführungsbeispielen wird die Erfindung näher erläutert. Es zeigen:

FIG 1 eine erfindungsgemäße Lichtwellenleiter-Durchführung im Schnitt,

FIG 2 eine andere erfindungsgemäße Lichtwellenleiter-Durchführung im Schnitt und

FIG 3 eine weitere erfindungsgemäße Lichtwellenleiter-Durchführung im Schnitt.

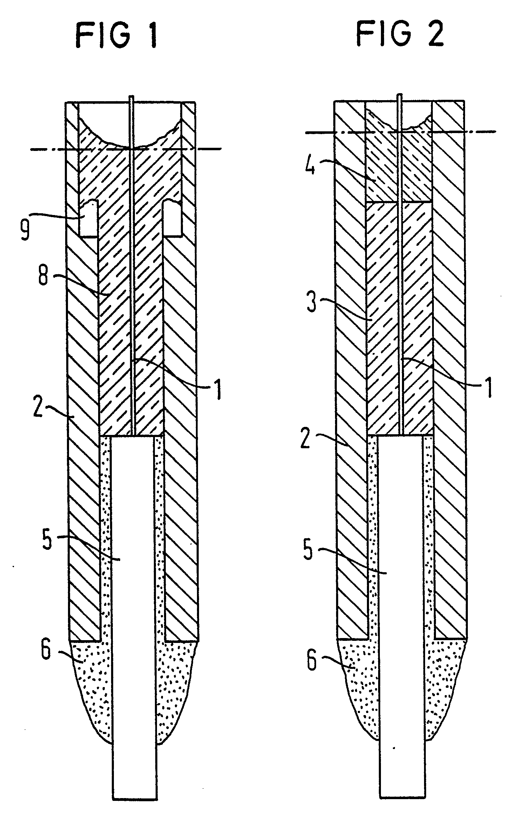

Die in den Figuren 1 und 2 dargestellte Lichtwellenleiter-Durchführung besteht aus einer Lichtwellenleiter-Faser 1, die in ein relativ dickwandig ausgebildetes Metallröhrchen 2 in dessen gehäuseseitiges Vorderteil ohne äußere Umhüllung (coating), d. h. blank bzw. nackt druckeingeglast und in dessen Hinterteil eingeklebt ist. Zur Wahrung des Prinzips der Druckglasdurchführung ist bei der Materialauswahl für das Metallröhrchen, das Einschmelzglas und die Faser darauf zu achten, daß das Metallröhrchen 2 aus einem Material besteht, dessen Wärmeausdehnungskoeffizient wesentlich höher als der des Einschmelzglases und des Materials der Lichtwellenleiter-Faser 1 ist. Das Metallröhrchen 2 besteht vorzugsweise aus einer Nickel-Eisen- oder Nickel-Eisen-Kobalt-haltigen Einschmelzlegierung. Das Herstellungsverfahren ist für beide Ausführungsformen gleich. Die von ihrer äußeren Umhüllung 5 befreite Lichtwellenleiter-Faser 1 (hier in Festaderausführung) wird in die Glaslotkapillare 8 (FIG 1) bzw. in die Glaskapillare 3 und den Glaslotring 4 (FIG 2) gesteckt. Die Kapillaren 3, 8 werden vorher in eine geeignete Ätze gelegt, um alle scharfen Kanten zu beseitigen, welche die abisolierte Lichtwellenleiter-Faser 1 durch Anritzen beschädigen könnten. Über die Glaslotkapillare 8 (FIG 1) und die Lichtwellenleiter-Faser 1 bzw. über die Glaskapillare 3, den Glaslotring 4 und die Lichtwellenleiter-Faser 1 (FIG 2) wird das Metallröhrchen 2 gesteckt. Dieses wird im oberen Teil, d. h. dem gehäuseseitigen Vorderteil auf die Schmelztemperatur des Glaslotes erhitzt und im unteren Teil, d. h. dem Hinterteil gekühlt, um die Umhüllung 5 der Lichtwellenleiter-Faser 1 vor Verbrennung zu schützen. Nach dem Erstarren der Schmelze steht diese unter radialer Druckspannung, weil der thermische Ausdehnungskoeffizient des Metalls größer als der des Glaslots ist. Die Innenquerschnittserweiterung 9, d. h. die Ausweitung des Metallröhrchens 2 auf der Innenseite bei dem in FIG 1 dargestellten Ausführungsbeispiel verhindert Spannungsbrüche an der Übergangsstelle Glaslotkapillare-Schmelze. In dem in FIG 2 dargestellten Beispiel ist das nicht notwendig, weil die Glaskapillare 3 wegen höherer Schmelztemperatur nicht angeschmolzen wird.

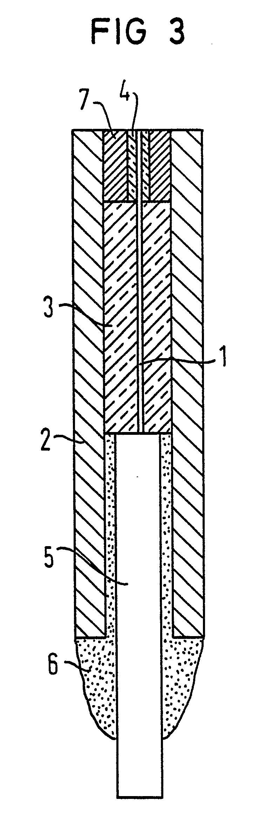

Bei dem in FIG 3 dargestellten Ausführungsbeispiel ist der Einglasquerschnitt auf ein Minimum beschränkt und gestattet sowohl eine Druckeinglasung als auch eine angepaßte Einglasung. Hierzu ist in das Ende des gehäuseseigen Vorderteils des Metallröhrchens 2 eine Metallkapillare 7 aus entsprechendem Material hermetisch dicht eingeschweißt bzw. eingelötet, so daß eine Querschnittsverengung gebildet ist. In diese Querschnittsverengung wird dann der Glaslotring 4 eingeglast. Die weitere Ausführung entspricht dem insbesondere im Zusammenhang mit FIG 2 geschilderten Beispiel. Diese Ausführungsform hat den Vorteil, daß das Material des Glaslotringes 4 aufgrund der zusätzlichen Metallkapillare 7 nahezu unabhängig von den Materialeigenschaften des Metallröhrchens 2 ist.

Nach der Einglasung wird die Lichtwellenleiter-Durchführung in einen Rezipienten gelegt und unter Vakuum geklebt. Dies garantiert, daß alle Hohlräume vom Kleber 6 ausgefüllt werden.

Nach dem Aushärten des Klebers 6 wird die Einglasung auf Höhe der strichpunktierten Linie (FIG 1 u. 2) plangeschliffen und poliert, um einen einwandfreien optischen Durchgang zu erreichen. Die fertige Einglasung kann vorteilhaft an hinteren Ende mit einem nicht dargestellten ʹSchrumpfschlauch als Knickschutz versehen werden.

**Ansprüche**

1. Lichtwellenleiter-Durchführung für optoelektronische Module, bei der eine Lichtwellenleiter-Faser durch ein Metallröhrchen hermetisch dicht geführt isl, das in einer Öffnung in der Modulgehäusewand befestigt ist, **dadurch gekennzeichnet,** daß die Lichtwellenleiter-Faser (1) in das relativ dickwandig ausgebildete Metallröhrchen (2) in dessen gehäuseseitiges Vorderteil ohne Umhüllung (5) druckeingeglast und in dessen Hinterteil eingeklebt ist.

2. Lichtwellenleiter-Durchführung nach Anspruch 1, **dadurch gekennzeichnet,** daß die blanke Lichtwellenleiter-Faser (1) mittels einer Glaskapillare (3), die nach außen von einem Glaslotring (4) abgeschlossen ist, in das Vorderteil des Metallröhrchens (2) druckeingeglast ist.

3. Lichtwellenleiter-Durchführung nach Anspruch 2, **dadurch gekennzeichnet,** daß in dem Ende des Vorderteils des Metallröhrchens (2) eine Metallkapillare (7) aus entsprechendem Material hermetisch dicht befestigt ist, so daß im Bereich des Glaslotringes (4) eine Querschnittsverengung gebildet ist.

4. Lichtwellenleiter-Durchführung nach Anspruch 1, **dadurch gekennzeichnet,** daß die blanke Lichtwellenleiter-Faser (1) mittels einer Glaslotkapillare (8) in das Vorderteil des Metallröhrchens (2) druckeingeglast ist,und daß das Ende des Vorderteils des Metallröhrchens (2) eine Innenquerschnittserweiterung (9) aufweist.

5. Lichtwellenleiter-Durchführung nach einem der Ansprüche 1 bis 4, **dadurch gekennzeichnet,** daß das Metallröhrchen (2) aus einem Material besteht, dessen Wärmeausdehnungskoeffizient höher als der des Einschmelzglases und des Materials der Lichtwellenleiter-Faser (1) ist.

6. Lichtwellenleiter-Durchführung nach einem der Ansprüche 1 bis 5, **dadurch gekennzeichnet,** daß das Metallröhrchen (2) aus einer Ni-Fe- oder Ni-Fe-Co-haltigen Einschmelzlegierung besteht.

7. Lichtwellenleiter-Durchführung nach einem der Ansprüche 1 bis 6, **dadurch gekennzeichnet,** daß die mit einer Umhüllung (5) versehene Lichtwellenleiter-Faser (1) im Hinterteil des Metallröhrchens (2) in einen Kleber (6) eingebettet ist.

8. Lichtwellenleiter-Durchführung nach einem der Ansprüche 1 bis 7, **dadurch gekennzeichnet,** daß das eine Umhüllung (5) aufweisende Außenteil der Lichtwellenleiter-Faser (1) mit einem Schrumpfschlauch versehen ist, der das Hinterteil des Metallröhrchens (2) mit umschließt.

9. Verfahren zum Herstellen einer Lichtwellenleiter-Durchführung nach einem der Ansprüche 1 bis 8, **dadurch gekennzeichnet,** daß die von ihrer äußeren Umhüllung (5) befreite Lichtwellenleiter-Faser (1) in eine Glaslotkapillare (8) oder in eine Glaskapillare (3) und einen Glaslotring (4) gesteckt wird, daß darüber ein relativ dickwandiges Metallröhrchen (2) gesteckt wird, daß das Metallröhrchen (2) am gehäuseseitigen Vorderteil auf die Schmelztemperatur des Glaslotes erhitzt und im Hinterteil gekühlt wird, um die Umhüllung (5) der Lichtwellenleiter-Faser (1) vor Verbrennung zu schützen, daß das Metallröhrchen (2) anschließend abgekühlt wird, daß nach der Druckeinglasung die Lichtwellenleiter-Faser (1) im Hinterteil des Metallröhrchens (2) mit einem Kleber (6) unter Vakuum verklebt wird, und daß nach dem Aushärten des Klebers (6) die Druckeinglasung plan geschliffen und poliert wird.

FIG 1       FIG 2

# FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 10, Nr. 52 (P-432)[2109], 28. Februar 1986, Seite 45 P 432; & JP-A-60 195 506 (NIPPON DENKI K.K.) 04-10-1985 * Zusammenfassung * --- | 1,7 | G 02 B 6/42 |
| A | US-A-3 371 413 (D.F. RUNDLE) * Figur 1; Spalte 1, Zeilen 68-72; Spalte 2, Zeilen 1-66 * --- | 1,3,5 | |
| A | PATENT ABSTRACTS OF JAPAN, Band 11, Nr. 19 (P-537)[2466], 20. Januar 1987, Seite 160 P 537; & JP-A-61 194 413 (HITACHI LTD) 28-08-1986 * Zusammenfassung * --- | 1 | |
| A | DE-A-3 533 920 (SIEMENS) * Figuren 1,2; Spalte 3, Zeilen 67-68; Spalte 4, Zeilen 1-68; Spalte 5, Zeilen 1-53 * --- | 1,3,9 | |
| A | PATENT ABSTRACTS OF JAPAN, Band 10, Nr. 162 (P-466)[2218], 10. Juni 1986, Seite 15 P 466; & JP-A-61 14 614 (KIYOUSERA K.K.) 22-01-1986 * Zusammenfassung * --- | 1 | RECHERCHIERTE SACHGEBIETE (Int. Cl.4) G 02 B 6/00 |
| A | CA-A-1 108 900 (RCA) * Figuren 1,3; Seite 5, Zeilen 11-30 * --- | 1,8 | |
| A | PATENT ABSTRACTS OF JAPAN, Band 5, Nr. 185 (P-91)[857], 25. November 1981, Seite P 91; & JP-A-56 113 111 (HITACHI SEISAKUSHO K.K.) 05-09-1981 * Zusammenfassung * ------ | 1,3 | |

Der vorliegende Recherchenbericht wurde für alle Patentansprüche erstellt

| Recherchenort | Abschlußdatum der Recherche | Prüfer |
|---|---|---|
| DEN HAAG | 07-07-1989 | MATHYSSEK K. |

EPO FORM 1503 03.82 (P0403)